## Europäisches Patentamt

## European Patent Office

## Office européen des brevets

(19)

(11) Veröffentlichungsnummer: **0 147 786**
**B1**

(12) **EUROPÄISCHE PATENTSCHRIFT**

(45) Veröffentlichungstag der Patentschrift:
**14.09.88**

(51) Int. Cl.⁴: **A 47 J 37/12**

(21) Anmeldenummer: **84115816.5**

(22) Anmeldetag: **19.12.84**

(54) **Fettbackgerät.**

(30) Priorität: **05.01.84 DE 3400241**
**01.09.34 DE 3432246**

(43) Veröffentlichungstag der Anmeldung:
**10.07.85 Patentblatt 85/28**

(45) Bekanntmachung des Hinweises auf die Patenterteilung:
**14.09.88 Patentblatt 88/37**

(84) Benannte Vertragsstaaten:
**AT BE CH DE FR GB IT LI LU NL SE**

(56) Entgegenhaltungen:
**AU - B - 447 810**
**DE - B - 1 110 834**
**FR - A - 1 414 201**
**FR - A - 1 561 396**
**NL - A - 8 001 007**

(73) Patentinhaber: **Beck, Reinhold, Bornweg 8,
D-6296 Mengerskirchen (DE)**

(72) Erfinder: **Beck, Reinhold, Bornweg 8,
D-6296 Mengerskirchen (DE)**

(74) Vertreter: **Weber, Dieter, Dr. et al, Dr. Dieter Weber und
Dipl.-Phys. Klaus Seiffert Patentanwälte
Gustav-Freytag-Strasse 25 Postfach 6145,
D-6200 Wiesbaden 1 (DE)**

ACTORUM AG

# Beschreibung

Fettbackgeräte, die zum Backen unterschiedlicher Nahrungsmittel, wie von Pommes frites, Kartoffelchips, Fisch, Schmalzgebackenem oder Fleischschnitzeln, verwendet werden, besitzen einen Fettbehälter, der zu erhitzendes Fett enthält und in dem eine Heizeinrichtung und ein Siebbehälter für die zu fritierenden Nahrungsmittel angeordnet sind. Die Heizeinrichtung ist im allgemeinen aus dem Fettbehälter herausschwenkbar und derart angeordnet, daß das Heizelement in der Fettschicht unterhalb des Siebbehälters liegt.

Bei solchen bekannten Fettbackgeräten, die zum Teil auch als Friteusen bezeichnet werden, fallen während des Fritierens üblicherweise kleine Teile vom Fritiergut, d.h. den zu fritierenden Nahrungsmitteln, und Gewürze ab und zirkulieren in dem heißen Fett, da sie sich infolge der Konvektion in dem heißen Fett nicht am Boden des Fettbehälters ablagern können. Bei diesem Zirkulieren verbrennen die kleinen Fritiergutteilchen und verunreinigungen das Fett sehr schnell. Derart verunreinigtes Fett überträgt in unerwünschter Weise unangenehme Geschmacks- und Geruchsstoffe auf frisches Fritiergut, dessen Geschmacksqualität so beeinträchtigt wird. Als Folge hiervon ist es bei bekannten Fettbackgeräten erforderlich, bei ganztägiger Benutzung das Fett oft auszutauschen.

Aus der DE-AS 1 110 834 ist ein Fritiergerät bekannt, das unterhalb des zu erhitzenden Öles eine Wasserschicht hat. Kühleinrichtungen sind bei diesem Gerät nicht vorgeseheh. Dieses Gerät kann nur mit Öl betrieben werden, doch wird Öl zu diesem Zweck heute praktisch nicht mehr benutzt, da es vom Aufbau wesentlich instabiler als alle Fette ist. Es hat etwa 50 Prozent mehrfach ungesättigte Fettsäuren, die bei Hitzebelastung sehr schnell verkohlen, was unwirtschaftlich ist. Würde man in diesem Gerät bei Raumtemperatur festes Fett einsetzen, müßte der Abstand zwischen Heizeinrichtung und Grenzfläche zwischen Fett und Wasser relativ groß gehalten werden, um zu verhindern, daß Wasser in die Fettschicht verdampft. Dies würde die erforderliche Fettmenge in unerwünschter Weise erhöhen und den Betrieb des Gerätes verteuern.

Die NL-A-8 001 007 beschreibt ein Fettbackgerät gemäß Oberbegriff des Anspruchs 1 mit einem Fettbehälter mit einer zu erhitzenden Fettschicht und darunter einer Wasserschicht, mit einer Heizeinrichtung sowie mit Kühleinrichtungen unterhalb der Grenzfläche zwischen Fett und Wasser in der Wasserschicht. Diese Kühleinrichtungen können weder eine Verdampfung von Wasser in die Fettschicht hinein, noch eine Konvektion in der Fettschicht verhindern.

Die der Erfindung zugrundeliegende Aufgabe bestand somit darin, Fettbackgeräte, die mit bei Normaltemperatur festen Fetten arbeiten können, derart zu verbessern, daß die erforderliche Fettmenge verringert und/oder die Brauchbarkeit des Fettes verlängert und die Austauschfrequenz vermindert wird sowie die Qualitätsminderung des Fritiergutes durch Übertragung von unerwünschten Geschmacksstoffen ausgeschlossen oder zumindest herabgesetzt wird.

Zur Lösung dieser Aufgabe ist das erfindungsgemäße Fettbackgerät mit einem Fettbehälter, der zu erhitzendes Fett enthält und in dem eine Heizeinrichtung, Kühleinrichtungen unterhalb der Heizeinrichtung, eine Wasserschicht unterhalb des zu erhitzenden Fettes und an seiner tiefsten Stelle ein Wasserablauf angeordnet sind, dadurch gekennzeichnet, daß die Kühleinrichtungen im Bereich und oberhalb der Grenzfläche zwischen Fett und Wasser angeordnet sind, daß im Fettbehälter ein Siebbehälter für das Fritiergut angeordnet ist und daß der Fettbehälter einen beim Einfüllen des Wassers als Niveauregler benutzbaren, unmittelbar unter der Grenzfläche zwischen Fett und Wasser angeordneten Fettablauf aufweist.

Infolge der Anordnung der Kühleinrichtung, die im Fett den Bereich der Grenzfläche zwischen Wasser und Fett kühlt, tritt überraschenderweise keine Verdampfung der unter der Fettschicht liegenden Wasserschicht ein, und der Bereich des Fettes, der unmittelbar an die Grenzfläche angrenzt, nimmt an der Konvektion in dem heißen Fett nicht teil, so daß dieser Bereich ausreichend kühl bleibt und die in diesen Bereich kommenden abgefallenen Teilchen des Fritiergutes nicht wieder mit hochgerissen werden. Vielmehr sinken diese Teilchen durch die Grenzfläche zwischen Fett und Wasser in die Wasserschicht ab und lagern sich in dieser als Sumpf ab, ohne in der Fettschicht zu zirkulieren und darin zu verbrennen.

Das Ergebnis hiervon ist, daß das Fett viel längere Zeit sauber bleibt und keine verkohlten oder unverkohlten Geschmacksstoffe auf das Fritiergut überträgt. Auf diese Weise kann man die Betriebsfähigkeit des Fettes vier- bis fünfmal so lange wie bei bekannten Fettbackgeräten halten und muß das Fett viel seltener wechseln. Dies ergibt eine große Ersparnis an Fett sowie eine Arbeitsersparnis, die mit dem Fettwechsel und der Reinigung des Fettbehälters verbunden ist.

Ein zusätzlicher überraschender Vorteil des erfindungsgemäßen Fettbackgerätes besteht darin, daß bei der Zuführung von frischem, wasserhaltigem Fritiergut, wie solchem aus Tiefkühlbehältern, das bekannte Aufschäumen und Überschäumen vermieden oder stark vermindert wird, wofür die Ursache nicht ohne weiteres erklärbar ist.

Die in Fettbackgeräten üblicherweise eingebaute thermostatische Regelung arbeitet in Friteusen nach der Erfindung präziser als bei bekannten Fettbackgeräten infolge der besseren Fettumwälzung. Außerdem braucht bei den erfindungsgemäßen Fettbackgeräten die Heizeinrichtung nicht herausschwenkbar gemacht zu werden, was Kosten für die teure Schwenkeinrichtung einspart und die Gefahr für die stromführenden Kabel und das Kapillarrohr des Wärmefühlers solcher Schwenkeinrichtungen beseitigt.

Schliesslich wird durch die Kühlzone auch ein örtliches Überhitzen in dem Fett vermieden, was einen zusätzlichen Vorteil des Erfindungsgegenstandes darstellt.

Die Erfindung macht von der Tatsache Gebrauch, daß Fett und Öle auf Wasser schwimmen, so daß sich eine natürliche Grenzfläche zwischen dem unteren Wasserpolster und der darüber befindlichen Fettschicht ergibt. Sofern in der oberen Schicht ein Öl oder bei Raumtemperatur flüssig bleibendes Fett verwendet wird, was selbstverständlich auch möglich ist, ist man bezüglich der Kühleinrichtungen und Kühltemperatur frei, da die Fritiergutteilchen die Grenzfläche zwischen flüssigem Fett und Wasser auf jeden Fall durchdringen und in die Wasserschicht absinken können. Verwendet man aber, wie üblich und besonders erwünscht, ein bei Raumtemperatur erstarrendes Fett zum Fritieren, so darf man in der Kühlzone nur so weit herabkühlen, daß das Fett auch in dieser Zone noch flüssig bleibt und so von den absinkenden Fritiergutteilchen durchdrungen werden kann. Vorzugsweise hält man die Temperatur in dem Fett in unmittelbarer Nachbarschaft zu der Grenzfläche zwischen Fett und Wasser auf einer Temperatur von 30 bis 60, besonders 40 bis 50 °C, während im Fritierbereich, d.h. im Bereich des Siebbehälters, die Fettemperatur üblicherweise etwa 170 bis 190 °C, besonders 180 °C beträgt.

Die Ausbildung der Kühleinrichtungen kann unterschiedlich sein.

Eine vorteilhafte Kühleinrichtung besteht in einer Verengung des Querschnittes des Fettbehälters, wie einer Einschnürung des Fettbehälters im Bereich der Grenzfläche zwischen Fett und Wasser bzw. etwas darüber. In diesem eingeschnürten Bereich ist die zu kühlende Fettmenge bzw. die Berührungsfläche zwischen Fett und Wasser relativ klein, so daß sie leicht durch die zirkulierende Luft von außen gekühlt werden kann. Außerdem ist die Fettumwälzung in dem verengten Bereich träge, so daß das Wasser gewöhnlich nicht über 50 °C erwärmt wird.

Diese Konstruktion eignet sich besonders für kleine Geräte. Bei größeren Geräten ist eine Kombination einer solchen Einschnürung mit Kühlrohren zu bevorzugen.

Die Kühleinrichtungen können auch eine von Kühlflüssigkeit, wie Wasser, durchströmte Kühlschlange oder eine andere übliche Kühleinrichtung sein. esonders einfach und zweckmäßig sind aber Kühleinrichtungen, die aus an beiden Enden offenen, von Luft durchstrichenen, im wesentlichen waagrechten Rohren bestehen. Solche Rohre gehen also mit ihren Enden durch die Wandung des Fettbehälters hindurch und öffnen sich nach außen an zwei einander gegenüberliegenden Seiten des Fettbackgerätes. Diese Kühleinrichtungen sind einfachst gebaut, bedürfen keiner Wartung, keiner Energie für ein Hindurchleiten von Kühlmedien und halten das Fett in der Grenzschicht auf der erwünschten Temperatur in dem oben bezeichneten Bereich, ohne daß die Gefahr besteht, daß das Fett zu stark gekühlt wird und damit an der Grenzfläche zwischen Fett und Wasser erstarrt.

Nach einer zweckmäßigen Ausführungsform der Erfindung ist oberhalb und nahe der Grenzfläche zwischen Fett und Wasser eine zusätzliche Heizeinrichtung vorgesehen, um zu verhindern, daß im Bereich dieser Grenzfläche längere Zeit eine feste Fettschicht verbleibt, wenn das Gerät angeheizt oder zeitweilig abgestellt und dann wieder in Betrieb genommen wird. Eine solche feste Fettschicht würde die vorteilhafte Funktion des Gerätes und ein Absinken der Fritiergutteilchen in die Wasserschicht verhindern.

Diese zusätzliche Heizeinrichtung wird vorzugsweise mit einem Thermostaten in Abhängigkeit der Temperatur in dem Fett nahe der Grenzfläche gesteuert. Vorzugsweise hält diese Heizeinrichtung das Fett in diesem Bereich auf 40 bis 50 °C, besonders auf etwa 50 °C. Bei Erreichen dieser Temperatur schaltet die Zusatzheizung ab. Sie kann aus einer Heizschlange oder einer auf der Außenwand des Fettbehälters angebrachten Heizeinrichtung bestehen.

Eine weitere vorteilhafte Ausgestaltung des Gerätes nach der Erfindung hat in dem Fett nahe der Grenzfläche einen Thermostaten, der bei Überschreiten einer bestimmten Temperatur die Hauptheizeinrichtung abschaltet. Die Abschalttemperatur liegt gewöhnlich bei etwa 70 °C. Dadurch wird ein Überhitzen und Aufkochen des Wassers vermieden.

Der Fettbehälter besitzt zweckmäßig einen sich nach unten verjüngenden Boden, damit der Sumpf der abgefallenen Fritiergutteilchen sich in der Spitze der Verjüngung sammelt und daher von dort leichter entnommen werden kann, wenn Fett und Wasser gewechselt werden.

Für den Fettwechsel und auch für den Wasserwechsel ist jeweils ein Ablauf, besonders ein Ablaßhahn, vorgesehen, der für das Ablassen des Wassers an der tiefsten Stelle des Fettbehälters und für das Ablassen des Fettes unmittelbar an der Grenzfläche zwischen Fett und Wasser angeordnet ist. Nachdem Fett und Wasser mit dem Veunreinigungssumpf abgelassen sind und das Fettbackgerät gereinigt ist, wird nach dem Schließen des Wasserablaufes zunächst frisches Wasser eingegossen, bis es den Fettablauf erreicht und aus diesem austritt. Sodann wird der Fettablauf geschlossen und die erforderliche Fettmenge oben auf das Wasserpolster aufgegeben.

Ein Verdampfen von Wasser aus der unteren Wasserschicht wurde beim Erfindungsgegenstand nicht beobachtet, wenn das Fett an der Grenzfläche zwischen Fett und Wasser auf 40 bis 50 °C herabgekühlt wurde, da dann die darunter befindliche Wasserschicht sich im wesentlichen auf Raumtemperatur befindet.

In der Zeichnung zeigen

Fig. 1 eine Ausführungsform eines Fettbackgerätes nach der Erfindung schematisch in senkrechtem Schnitt von vorn gesehen,

Fig. 2 das in Fig. 1 dargestellte Fettbackgerät in senkrechtem Schnitt, von der Seite gesehen, und

Fig. 3 eine weitere Ausführungsform eines Fettbackgerätes nach der Erfindung in der Darstellungsweise der Fig. 1.

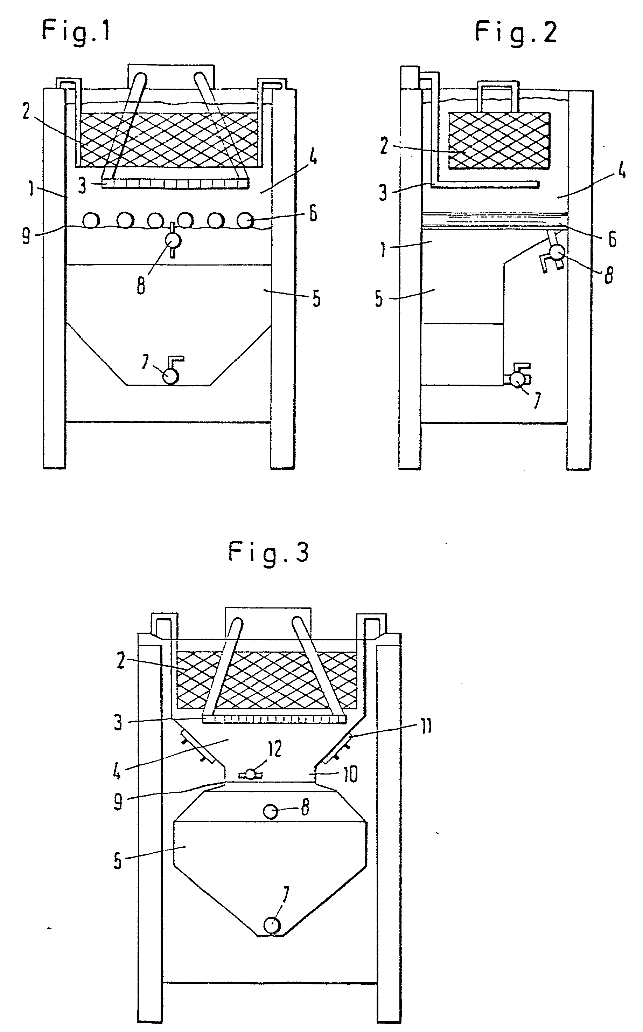

Das in den Fig. 1 und 2 dargestellte Fettbackgerät besitzt einen Fettbehälter 1, in dem sich im unteren Teil eine Wasserschicht 5 und im oberen Teil eine Fettschicht 4 befindet. Die Grenzfläche zwischen beiden Schichten 4 und 5 ist mit 9 bezeichnet.

In der Fettschicht 4 befindet sich die Heizeinrichtung 3 und darüber der Siebbehälter 2 für Fritiergut.

Unmittelbar über der Grenzfläche 9 zwischen der Fettschicht 4 und der Wasserschicht 5 sind als Kühleinrichtungen 6 zueinander parallel angeordnete Rohre vorgesehen, deren Enden durch die Wandung des Fettbehälters 1 hindurchgehen und sich nach außen öffnen, so daß Luft hindurchstreichen kann.

Unmittelbar unterhalb der Grenzfläche 9 ist ein Ablaßhahn 8 für das Fett angeordnet, und in dem konisch verjüngten unteren Ende des Fettbehälters 1 befindet sich am untersten Ende ein Ablaßhahn 7 für Wasser und Verunreinigungsschlamm. Der Wasserspiegel bzw. die Grenzfläche zwischen Fettschicht 4 und Wasserschicht 5 kann durch das obere Ende des Fettablaßhahns 8 bestimmt werden, indem beim Füllen des Fettbehälters 1 so viel Wasser eingelassen wird, bis es aus dem geöffneten Fettablaßhahn 8 austritt.

Bei der in Fig. 3 dargestellten Ausführungsform der Erfindung werden für gleiche Teile die gleichen Bezugszeichen wie in den Fig. 1 und 2 verwendet.

Das Fettbackgerät besitzt wiederum im oberen Teil eine Fettschicht 4 und im unteren Teil eine Wasserschicht 5, die an der Grenzfläche 9 aufeinandertreffen. Diese Grenzfläche 9 liegt im Bereich der Einschnürung 10 des Fettbehälters. Die Einschnürung ihrerseits liegt unter der Heizeinrichtung 3 und dem Siebbehälter 2. Der Ablaßhahn 7 dient zum Ablassen von Wasser, der Ablaßhahn 8 zum Ablassen von Fett.

Auf der Außenseite des Fettbehälters wenig oberhalb der Grenzfläche 9 ist auf der Außenwand eine Zusatzheizeinrichtung 11 vorgesehen, die durch einen Thermostaten gesteuert wird. Der Thermostat 12 schaltet die Heizeinrichtung 3 ab, wenn eine bestimmte Temperatur, wie 70 °C, überschritten wird, um ein Überhitzen des Wassers zu vermeiden.

Die im Fettbehälter entstehende Schräge im unteren Bereich ist derart steil, daß Panade sich dort nicht absetzt, sondern ins Wasserbad absinkt. Auch bietet diese Konstruktion eine bessere Reinigungsmöglichkeit des unteren Wasserbehälters, da hier Kühlrohre nicht im Wege sind. Die Berührungszone Fett/Wasser ist etwa 3 bis 6 cm hoch, um den Fett/Wasser-Stand zu regulieren. Bei stark beanspruchten Geräten wird der Wasserstand in der Berührungszone abgesenkt, während die Geräte mit einer schwachen Nutzung einen höheren Wasserstand haben dürfen.

Zur Darstellung des technischen Effektes des erfindungsgemäßen Fettbackgerätes mit einem Fettbackgerät nach dem Stand der Technik wurde ein Fettbackgerät der in den Fig. 1 und 2 dargestellten Bauart mit einem entsprechenden Fettbackgerät nach dem Stand der Technik mit gleichem Fettvolumen, jedoch ohne Wasserschicht und ohne Kühleinrichtungen verglichen.

Bei gleichen Betriebsbedingungen, d.h. gleicher Fettmenge und gleicher Fettemperatur sowie gleichem Fritiergut in der Form von Pommes frites aus frischen Kartoffeln wurden als Kriterien für die Notwendigkeit eines Fettaustausches infolge einer Verschlechterung der Eigenschaften des Fettes der AV-Säure-Index (als Anzeichen für den Fettsäuregehalt) und der Oxidationsindex bestimmt.

Bei dem verwendeten frischen unbenutzten Fett lag der AV-Säure-Index bei 0,07 und der Oxidationsindex bei 0,49 mg/kg.

Bei dem Fettbackgerät nach dem Stand der Technik lag nach 65 Betriebsstunden der AV-Säure-Index bei 1,85 und der Oxidationsindex bei 1,30 mg/kg.

Bei dem Fettbackgerät nach der Erfindung dagegen lag nach 310 Betriebsstunden der AV-Säure-Index bei 0,44 und der Oxidationsindex bei 1,12 mg/kg.

Es ist also ersichtlich, daß trotz etwa fünffacher Betriebsdauer im Falle der Verwendung des erfindungsgemäßen Fettbackgerätes Abbau und Verunreinigung des verwendeten Fettes erheblich geringer waren als bei Verwendung des Fettbackgerätes nach dem Stand der Technik unter den gleichen Betriebsbedingungen.

**Patentansprüche**

1. Fettbackgerät mit einem Fettbehälter (1), der zu erhitzendes Fett (4) enthält und in dem eine Heizeinrichtung (3), Kühleinrichtungen (6) unterhalb der Heizeinrichtung (3), eine Wasserschicht (5) unterhalb des zu erhitzenden Fettes (4) und an seiner tiefsten Stelle ein Wasserablauf (7) angeordnet sind, dadurch gekennzeichnet, daß die Kühleinrichtungen (6) im Bereich und oberhalb der Grenzfläche (9) zwischen Fett (4) und Wasser (5) in Höhe des Fettes (4) angeordnet sind, daß im Fettbehälter (1) ein Siebbehälter (2) für das Fritiergut angeordnet ist und daß der Fettbehälter (1) einen beim Einfüllen des Wassers als Niveauregler benutzbaren, unmittelbar unter der Grenzfläche (9) zwischen Fett und Wasser angeordneten Fettablauf (8) aufweist.

2. Fettbackgerät nach Anspruch 1, dadurch gekennzeichnet, daß die Kühleinrichtung (10) aus einer Verengung des Querschnittes des Fettbehälters (1) im Bereich der Grenzfläche (3) zwischen Fett und Wasser besteht.

3. Fettbackgerät nach Anspruch 2, dadurch gekennzeichnet, daß die Kühleinrichtung (10) eine Einschnürung des Fettbehälters (1) im Bereich der Grenzfläche (9) zwischen Fett und Wasser ist.

4. Fettbackgerät nach Anspruch 1, dadurch gekennzeichnet, daß die Kühleinrichtung (6) an beiden Enden offene, von Luft durchstrichene, im wesentlichen waagrechte Rohre sind.

5. Fettbackgerät nach einem der Ansprüche 1 bis 4, dadurch gekennzeichnet, daß der Fettbehälter (1) einen sich nach unten verjüngenden Boden besitzt.

6. Fettbackgerät nach Anspruch 1 bis 5, dadurch gekennzeichnet, daß die Kühleinrichtungen (6) so ausgebildet sind, daß sie das Fett nur so weit kühlen, daß es auch in der Kühlzone flüssig bleibt, vorzugsweise auf 30 bis 60, insbesondere auf 40 bis 50 °C kühlen.

7. Fettbackgerät nach einem der Ansprüche 1 bis 6, dadurch gekennzeichnet, daß oberhalb und nahe der Grenzfläche (9) eine zusätzliche Heizeinrichtung (11) angeordnet ist.

8. Fettbackgerät nach Anspruch 7, dadurch gekennzeichnet, daß die zusätzliche Heizeinrichtung (11) durch einen die Temperatur in dem Fett nahe der Grenzfläche (9) abfühlenden Thermostaten gesteuert ist, vorzugsweise die Temperatur im Fett nahe der Grenzfläche (9) auf etwa 40 bis 50 °C hält.

9. Fettbackgerät nach einem der Ansprüche 1 bis 8, dadurch gekennzeichnet, daß in dem Fett nahe der Grenzfläche (9) ein Thermostat (12) vorgesehen ist, der bei Überschreiten einer bestimmten Temperatur, vorzugsweise etwa 70 °C, die Heizeinrichtung (3) abschaltet.

## Claims

A fat frier comprising a fat container (1) which contains fat (4) to be heated and in which are disposed a heating means (3), cooling means (6) beneath the heating means (3), a layer of water (5) beneath the fat (4) to be heated and a water discharge (7) at it's lowest point, characterized in that the cooling means (6) is disposed in the region of and above the interface (9) between the fat (4) and the water (5) in the height of the fat (4), that in the fat container (1) a sieve-type container (2) for the substance to be fried is disposed and that the fat container (1) has a fat discharge (8) which is useful as a level controlling means during introduction of the water and is disposed immediately beneath the interface (9) between the fat and the water.

2. A fat frier according to claim 1, characterized in that the cooling means (10) consists of a reduction in the cross-section of the fat container (1) in the region of the interface (3) between the fat and the water.

3. A fat frier according to claim 2, characterized in that the cooling means (10) is a constriction of the fat container (1) in the region of the interface (9) between the fat and the water.

4. A fat frier according to claim 1, characterized in that the cooling means (6) is substantially horizontally pipes which are open at both ends and through which air flows.

5. A fat frier according to one of the claims 1 to 4, characterized in that the fat container (1) has a downwardly tapering bottom.

6. A fat frier according to claims 1 to 5, characterized in that the cooling means (6) is adapted so that it cools the fat only so far that it remains liquid, preferably cools at 30 to 60, especially a 40 to 50 °C.

7. A fat frier according to one of the claims 1 to 6, characterized in that above and adjacent to the interface (9) an additional heating means (11) is disposed.

8. A fat frier according to claim 7, characterized in that the additional heating means (11) is controlled by a thermostat sensing the temperature in the fat adjacent to the interface (9), preferably holds the temperature in the fat adjacent to the interface (9) at about 40 to 50 °C.

9. A fat frier according to one of the claims 1 to 8, characterized in that the fat adjacent the interface (9) the thermostat (12) is disposed which switches off the heating means (3) when the given temperature, preferably about 70 °C, is exceeded.

## Revendications

1. Friteuse comportant un réservoir à graisse (1), qui contient la graisse (4) devant être chauffée et dans lequel se trouvent disposés un dispositif de chauffage (3), des dispositifs de refroidissement (6) situés au-dessous du dispositif de chauffage (3), une couche d'eau (5) située au-dessous de la graisse (4) devant être chauffée, et une évacuation (7) pour l'eau, située au niveau de la partie la plus basse du réservoir, caractérisé en ce que les dispositifs de refroidissement (6) sont disposés au voisinage et au-dessus de l'interface (9) entre la graisse (4) et l'eau (5) à la hauteur de la graisse (4), en ce qu'un bac filtrant (2) pour la friture est disposé dans le réservoir à graisse (1) et en ce que le réservoir à graisse (1) comporte une évacuation de la graisse (8), utilisable en tant que régulateur de niveau lors du remplissage de l'eau et situé directement au-dessous de l'interface (9) entre la graisse et l'eau.

2. Friteuse selon la revendication 1, caractérisé en ce que le dispositif de refroidissement (10) est constitué par une zone de section transversale réduite du réservoir à graisse (1) au voisinage de l'interface (3) entre la graisse et l'eau.

3. Friteuse selon la revendication 2, caractérisé en ce que le dispositif de refroidissement (10) est formé par une partie rétrécie du réservoir à graisse (1) dans la zone de l'interface (9) entre la graisse et l'eau.

4. Friteuse selon la revendication 1, caractérisé en ce que le dispositif de refroidissement (6) est formé par des tubes ouverts à leurs deux extrémités, traversés par l'air et sensiblement horizontaux.

5. Friteuse selon l'une des revendications 1 à 4, caractérisé en ce que le réservoir à graisse (1) possède un fond qui se rétrécit vers le bas.

6. Friteuse selon l'une des revendications 1 à 5, caractérisé en ce que les dispositifs de refroidissement (6) sont agencés de telle sorte qu'ils refroidissent la graisse juste suffisamment pour qu'elle reste liquide également dans la zone de refroidissement, c'est-à-dire qu'ils la refroidissent de préférence entre 30 et 60 et notamment entre 40 et 50 °C.

7. Friteuse selon l'une des revendications 1 à 6, caractérisé en ce qu'un dispositif de chauffage supplémentaire (11) est disposé au-dessus et à proximité de l'interface (9).

8. Friteuse selon la revendication 7, caractérisé en ce que le dispositif de chauffage supplémentaire (11) est commandé par un thermostat détectant la température de la graisse au voisinage de l'interface (9) et maintenant de préférence la température de la graisse à proximité de cette interface (9) entre environ 40 et 50 °C.

9. Friteuse selon l'une des revendications 1 à 8, caractérisé en ce qu'il est prévu dans la graisse, à proximité de l'interface (9), un thermostat (12), qui lors du dépassement d'une température déterminée, de préférence environ 110 °C, débranche le dispositif de chauffage (3).

# Fig.1

# Fig.2

# Fig.3

7